# EUROPEAN PATENT SPECIFICATION

(11) **EP 0 728 620 B1**
(45) Date of publication and mention of the grant of the patent: **08.05.2002**
(21) Application number: 96100648.3
(22) Date of filing: 17.01.1996
(51) Int. Cl.: B60R 16/02, H02H 3/00

(54) **Electric junction box and electric current distribution system for automotive vehicles**
Elektrischer Anschlusskasten und elektrisches Stromverteilungssystem für Kraftfahrzeuge
Boîtier de raccordement électrique et système de distribution de courant électrique pour véhicules

(30) Priority: 23.02.1995 JP 3508295
(43) Date of publication of application: 28.08.1996
(73) Proprietor: SUMITOMO WIRING SYSTEMS, LTD., Yokkaichi City Mie 510 (JP)
(72) Inventor: Onizuka, Takahiro, c/o Sumitomo Wiring Syst., Ltd., Yokkaichi-City, Mie 510 (JP); Saka, Yuuji, c/o Sumitomo Wiring Syst., Ltd., Yokkaichi-City, Mie 510 (JP)
(74) Representative: Müller-Boré & Partner Patentanwälte

(56) References cited:
- EP-A- 0 418 665
- US-A- 3 737 887
- US-A- 4 344 100
- PATENT ABSTRACTS OF JAPAN vol. 018, no. 653 (M-1720), 12 December 1994 & JP 06 255432 A (FUJITSU TEN LTD), 13 September 1994,
- PATENT ABSTRACTS OF JAPAN vol. 008, no. 087 (M-291), 20 April 1984 & JP 59 002955 A (NITSUSAN SHIYATAI KK), 9 January 1984,

## Description

The present invention relates to an electric junction box for use in an electrical current distribution system according to the preamble of claim 1.

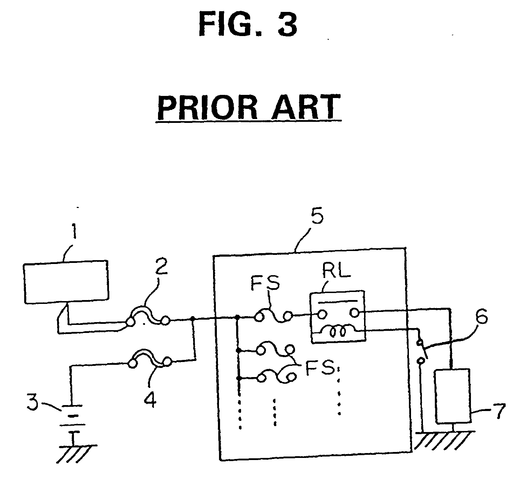

The prior art electric current distribution system for automotive vehicles is, for example, constructed as shown in FIG. 3. Specifically, one end of a first fusible link 2 is connected with an alternator 1, and one end of a second fusible link 4 is connected with a positive terminal of a battery 3 whose negative terminal is grounded. The other ends of both fusible links 2 and 4 are connected with an input terminal of a junction box installed in an engine compartment. One end of each of respective loads 7 such as a direct lamp system, a motor system, and an ignition system is connected with a corresponding one of a plurality of output terminals of the junction box 5 via a switch 6. The other ends of the respective loads 7 are grounded.

The junction box 5 houses a plurality of series circuits disposed between the input terminal and the respective output terminals. Each series circuit consists essentially of a fuse FS and a relay RL. For example, when the switch 6 is turned on, the relay RL operates to supply an electric current to the corresponding load 7.

When the engine starts after an ignition switch is turned on, a current from the battery 3 flows into the junction box 5. After the start of the engine, a current obtained by rectifying an alternating current generated in the alternator 1 flows into the battery 3 and the respective loads 7 via the junction box 5.

On the other hand, when short-circuiting occurs in the load 7, an excessive current burns out the fuse FS disposed along a current path to the load 7, thereby cutting off a flow of current to the load 7.

However, in the prior art electric current distribution system, once the fuse FS is burnt out, the system cannot be restored unless the burnt fuse FS is replaced by a new one. This makes maintenance very tedious.

JP Unexamined Patent Publication No. 06 255432 A (FUJITSU TEN LTD), corresponding to the preamble of the claim 1 of the present invention, discloses a breaker for an automobile which can recognize the generation of an abnormal condition, as to a breaker for automobile which cuts off, a feeder passage when an abnormal current flows to the feeder passage to feed the power from a battery to numerous electric apparatus loaded on a vehicle. The system is composed by providing a cutoff means provided in series in a feeder passage from a battery to a load, and can cut off the feeder passage; a current detecting means which can detect the current amount flowing the feeder passage; a discriminating means to discriminate the condition of power consumption in the load; and a control means to operate the cut off means so as to cut off the feeder passage, when the current amount detected by the current detecting means is abnormal in the excessive amount side, to the power consumption detected by the discriminating means. A current cut off means is comprehended as a relay, control means as a CPU and current detecting means as a sensing resistor/ current measurement sensor. The CPU actuates the relay to cut off the current path in the case that the sensing resistor detects an abnormal current.

Accordingly, an object of the present invention is to provide a junction box for use in an electric current distribution system and an electric current distribution system, which allows for a simplified maintenance, in particular by obviating the need for replacement of fuses as in the prior art and which provides a simplified control system.

This object is solved by an electric junction box according to claim 1 and by an electric current distribution system according claim 5. Preferred embodiments of the invention are subject of the dependent claims.

According to the invention, there is provided an electric junction box for use in an electric current distribution system for automotive vehicles, comprising: a current detector provided for an external load and adapted to compare an input current to the junction box with an output current from the load and output a normal detection signal when the input current and the output current are substantially equal to each other while outputting an abnormal detection signal when the input current and the output current are at variance with each other, and a current controller provided for the load and adapted to cause, upon receipt of the normal detection signal, the input current to flow along a current path leading to the load while causing, upon receipt of the abnormal detection signal, the input current to flow into a current cutoff device, wherein the current cutoff device includes a thermal device whose resistance value varies with temperature, thereby cutting off the flow of current into the load.

According to a preferred embodiment of the invention, the current cutoff device is disposed in parallel with the current path.

Preferably, the current detector comprises a differential amplifier.

Further preferably, the thermal device comprises a posistor and-/or a thermistor.

According to the invention, there is further provided an electric current distribution system for automotive vehicles, as defined in claim 5,

According to a preferred embodiment, the electric current distribution system further comprises wiring harnesses for forming current feedback paths from the load or respective loads to the battery.

According to a further preferred embodiment, the current detector further comprises a current change detector for detecting a change of current. The current change detector can detect a change in current e.g. due to a misfunction of the load due to external influences and may cause the current to flow into the current cutoff device by outputting an abnormal detection signal thus indicating that there is a misfunction of the load or other components.

According to a further preferred embodiment, the current change detector compares the input current with a predetermined or predeterminable threshold and outputs an abnormal detection signal when the input current is not lower than the threshold. Thus, as soon as the input current is higher or equal to the predetermined or predeterminable threshold, an abnormal detection signal is emitted e.g. to signal a misfunction of the load by e.g. an error lamp in the control panel or to cause the current to flow into the current cutoff device. The comparison of the input current with the predetermined or predeterminable threshold may be performed after a predetermined or predeteminable time period has elapsed after the switching on e.g. of the load, in particular, in order to ensure that an initial high current consumption i.e. a high initial current, which is lowered after a given time (e.g. a current-glitch caused by the electromagnetic charging up of an inductance or the like) does not cause an abnormal detection signal to be emitted.

According to a further preferred embodiment, the current change detector compares an actual input current with a previous input current and outputs an abnormal detection signal when the actual input current is substantially higher than the previous input current. Thus, by storing a previous input current and comparing an actual current input with the previous input current, a misfunction of a component e.g. a load is detected and signalled by emitting an abnormal detection signal e.g. to a signal lamp or by causing the current to flow into a current cutoff device.

According to a preferred embodiment, there is provided an electric current distribution system for automotive vehicles in which first and second fusible links are connected with an alternator and a battery, respectively, and an input terminal of a junction box is connected with the first and the second fusible links and a plurality of output terminals thereof are connected with respective loads, comprising wiring harnesses for forming current feedback paths from the respective loads to the battery, wherein the junction box comprises a current detector provided for each load and adapted to compare an input current to the junction box with an output current from the corresponding load via the corresponding wiring harness and output a normal detection signal when the input current and the output current are equal to each other while outputting an abnormal detection signal when the input current and the output current are at variance with each other; and a current controller provided for each load and adapted to cause, upon receipt of the normal detection signal, the input current to flow along a current path leading to the corresponding load while causing, upon receipt of the abnormal detection signal, the input current to flow into a current cutoff device including a thermal device which is disposed in parallel with the current path and a resistance of which varies with temperature, thereby cutting off the flow of current into the corresponding load.

Accordingly, each current detector compares the output current with the input current, and outputs the normal detection signal when the input current and the output current are equal to each other while outputting the abnormal detection signal when the input current and the output current are at variance with each other. The current controller causes, upon receipt of the normal detection signal, the input current to flow into the corresponding load along the current path while causing, upon receipt of the abnormal detection signal, the input current to flow into the current cutoff device including the thermal device which is disposed in parallel with the current path and whose resistance value varies with temperature, thereby cutting off the flow of current into the corresponding load on the basis of a variation of the resistance value of the thermal device. This obviates the need for replacement of fuses as in the prior art, thereby simplifying maintenance.

As described above, the current detector is, for each load, provided which outputs the normal detection signal when the input current and the output current are equal to each other while outputting the abnormal detection signal when the input current and the output current are at variance with each other. Each current controller causes, upon receipt of the normal detection signal, the current to flow into the corresponding load along the current path while, upon receipt of the abnormal detection signal, cutting off the flow of current into the load via the current cutoff device. Accordingly, upon short-circuiting or like abnormality in the load, the flow of current into the load can be cut off on the basis of a variation of the resistance value of the thermal device of the current cutoff device. This obviates the need for replacement of fuses as in the prior art, thereby providing the junction box which can be easily maintained.

These and other objects, features and advantages of the present invention will become more apparent upon a reading of the following detailed description and accompanying drawings in which:
FIG. 1 is a schematic block diagram of one embodiment according to the invention,
FIG. 2 is a detailed block diagram of the embodiment, and
FIG. 3 is a diagram of a prior art electric current distribution system.

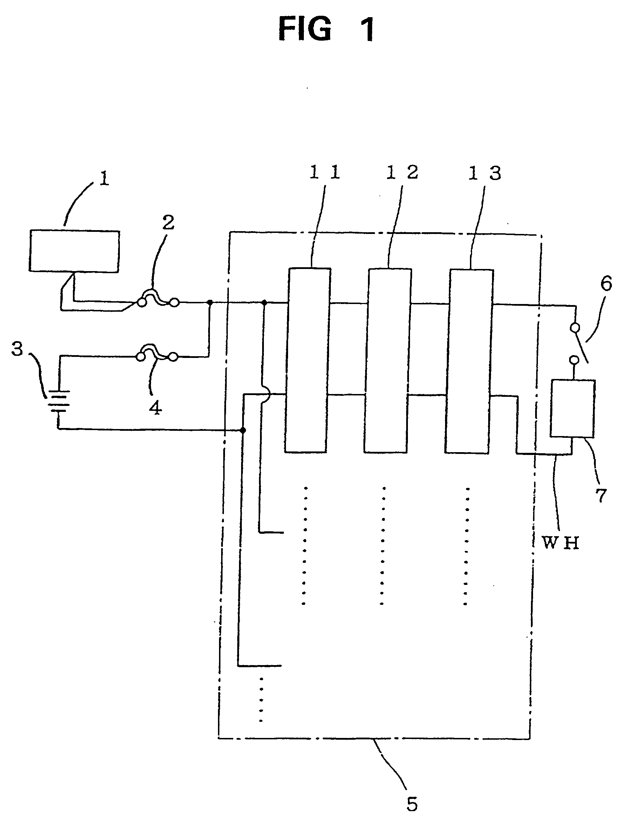

In FIG. 1, elements identical or similar to those in FIG. 3 are identified by the same reference numerals. FIG. 1 differs from FIG. 3 in that, instead of grounding the respective loads 7 and the negative terminal of the battery 3, wiring harnesses WH are provided to form current feedback paths from the respective loads 7 to the battery 3, thereby forming a closed-circuit construction.

Further, instead of the series circuits each consisting of the fuse FS and the relay RL and provided between the input terminal and the corresponding output terminal of the junction box 5, there are provided, in particular for each load 7, in particular in series a current detector 11, a current controller 12 and a relay device 13. Each current detector 11 compares an input current to the junction box 5 with an output current from the corresponding load 7 via the corresponding wiring harness WH, and outputs a normal detection signal when the output current is equal to the input current while outputting an abnormal detection signal when the output current is at variance with or different from the input current. Each current controller 12 causes, upon receipt of the normal detection signal, the input current to flow along a current path leading to the corresponding load 7 while causing, upon receipt of the abnormal detection signal, the input current to flow into a current cutoff device including a posistor disposed in parallel with the current path, thereby cutting off the flow of current into the corresponding load 7. The posistor is a thermal device whose resistance varies with temperature. The relay device 13 includes a relay for supplying the current from the corresponding current controller 12 to the corresponding load 7 and a transistor or like control device for controlling the relay.

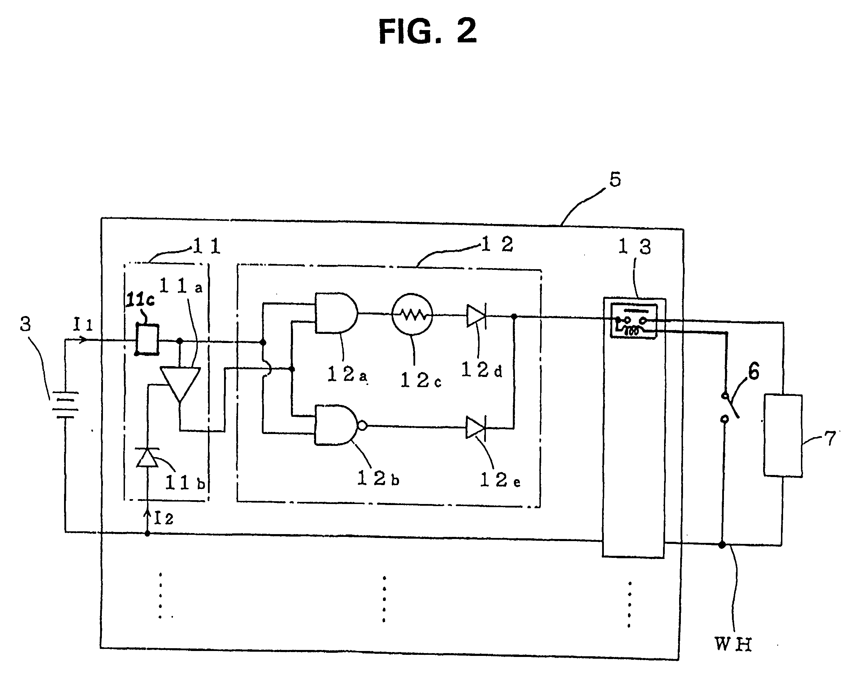

Next, the detailed constructions of the respective elements are described with reference to FIG. 2. FIG. 2 shows the current detector 11, the current controller 12 and the relay device 13 for one load 7. Although no description is given to the constructions for the other loads 7, the similar constructions are provided for those loads 7.

As shown in FIG. 2, the current detector 11 includes a differential amplifier 11a and a reverse-blocking diode 11b. One input terminal of the differential amplifier 11a is connected with the input terminal of the junction box 5, whereas the other input terminal thereof is connected with the wiring harness WH via the diode 11b. The current detector 11 outputs a low-level (hereinafter, L) signal as a normal detection signal when an input current I1 is equal to an output current I2, while outputting a high-level (hereinafter, H) signal as an abnormal detection signal when the input current I1 is at variance with the output signal I2.

Further, as shown in FIG. 2, the current controller 12 includes an AND gate 12a, a NAND gate 12b, a posistor 12c as a thermal device, and reverse-blocking diodes 12d and 12e. One input terminal of each of the gates 12a and 12b is connected with the input terminal of the junction box 5, whereas the other output terminal thereof is connected with the output terminal of the differential amplifier 11a. The output terminal of the AND gate 12a is connected with the relay device 13 via the posistor 12c and an anode and a cathode of the diode 12d. The output terminal of the NAND gate 12d is connected with the relay device 13 via an anode and a cathode of the diode 12e disposed along the current path.

When the differential amplifier 11a delivers a L-output corresponding to the normal detection signal, the AND gate 12a and the NAND gate 12b deliver a L-output and a H-output, respectively, with the result that a current is supplied to the load 7 via the diode 12e and the relay device 13.

On the other hand, in the case where short-circuiting occurs in the load 7, the input current I1 and the output current I2 become at variance with each other (I1 < I2 or I1 > I2). Accordingly, the differential amplifiers 11a delivers a H-output corresponding to the abnormal detection signal as described above. Then, the AND gate 12a and the NAND gate 12b deliver a H-output and a L-output, respectively, with the result that a current is supplied to the load 7 via the posistor 12c and the anode and the cathode of the diode 12d disposed downstream from the AND gate 12a and the relay device 13.

Accordingly, even if short-circuiting occurs in any of the loads 7, replacement of fuses as in the prior art is not necessary, thereby simplifying maintenance.

The foregoing embodiment is described with respect to the case where a posistor is used as a thermal device. However, it should be appreciated that a thermistor may be used to cut off a flow of current into the load 7 on the basis of its resistance-temperature characteristic.

As described above, according to the invention, the current detector is, for each load, provided which outputs the normal detection signal when the input current and the output current are equal to each other while outputting the abnormal detection signal when the input current and the output current are at variance with each other. Each current controller causes, upon receipt of the normal detection signal, the current to flow into the corresponding load along the current path while, upon receipt of the abnormal detection signal, cutting off the flow of current into the load via the current cutoff device. Accordingly, upon short-circuiting or like abnormality in the load, the flow of current into the load can be cut off on the basis of a variation of the resistance value of the thermal device of the current cutoff device. This obviates the need for replacement of fuses as in the prior art, thereby providing the junction box which can be easily maintained.

The current detector 11 may further comprise a current change detector 11c for detecting a change of current. The current change detector 11c can detect a change in current e.g. due to a misfunction of the load 7 due to external influences and may cause the current to flow into the current cutoff device 12a, 12c, 12d by outputting an abnormal detection signal H thus indicating that there is a misfunction of the load 7 or other components.

In particular, the current change detector 11c compares the input current I1 with a predetermined or predeterminable threshold and outputs an abnormal detection signal H when the input current I1 is not lower than the threshold. Thus, as soon as the input current I1 is higher or equal to the predetermined or predeterminable threshold, an abnormal detection signal H is emitted e.g. to signal a misfunction of the load 7 by e.g. an error lamp in the control panel or to cause the current to flow into the current cutoff device 12a, 12c, 12d. The comparison of the input current I1 with the predetermined or predeterminable threshold may be performed after a predetermined or predeterminable time period has elapsed after the switching on e.g. of the load 7, in particular, in order to ensure that an initial high current consumption i.e. a high initial current, which is lowered after a given time (e.g. a current-glitch caused by the electromagnetic charging up of an inductance or the like) does not cause an abnormal detection signal H to be emitted.

Furthermore, the current change detector 11c compares an actual input current I1 with a previous input current and outputs an abnormal detection signal H when the actual input current I1 is substantially higher than the previous input current. Thus, by storing a previous input current and comparing an actual current input I1 with the previous input current, a misfunction of a component e.g. a load 7 is detected and signalled by emitting an abnormal detection signal H e.g. to a signal lamp or by causing the current to flow into the current cutoff device 12a, 12b, 12d.

### LIST OF REFERENCE NUMERALS

- 1: Alternator
- 2, 4: First and Second Fusible Links
- 3: Battery
- 5: Junction Box
- 7: Load
- 11: Current Detector
- 11a: Differential Amplifier
- 12: Current Controller
- 12c: Posistor
- 13: Relay Device

## Claims

1. An electric junction box for use in an electric current distribution system for automotive vehicles, comprising:
a current detector (11) provided for an external load (7) and adapted to compare an input current (I1) to the junction box (5) with an output current (I2) from the load (7) and output a normal detection signal (L) when the input current (I1) and the output current (I2) are substantially equal to each other while outputting an abnormal detection signal (H) when the input
current (I1) and the output current (I2) are at variance with each other, and
a current controller (12) provided for the load and adapted to cause, upon receipt of the normal detection signal (L), the input current (I1) to flow along a current path (12b, 12e)
leading to the load (7) while causing, upon receipt of the abnormal detection signal (H), the input current (I1) to flow into a current cutoff device (12a, 12c, 12d),
**characterized in that**
the current cutoff device (12a, 12c, 12d) includes a thermal device (12c) whose resistance value varies with temperature, thereby cutting off the flow of current into the load (7).

2. An electric junction box according to claim 1, wherein the current cutoff device (12a, 12c, 12d) is disposed in parallel with the current path (12b, 12e).

3. An electric junction box according to claim 1 or 2, wherein the current detector (11) comprises a differential amplifier (11a).

4. An electric junction box system according to one of the preceding claims 4, wherein the thermal device (12c) comprises a posistor and/or a thermistor.

5. An electric current distribution system for automotive vehicles, comprising at least one electric junction box according to one of the preceding claims, in which first and second fusible links (2, 4) are connected with an alternator (1) and a battery (8), respectively, and an input terminal of the junction box (5) is connected with the first and the second fusible links (2, 4) and a plurality of output terminals thereof are connected with at least one load (7).

6. An electric current distribution system according to claim 5, further comprising wiring harnesses (WH) for forming current feedback paths from the load (7) or respective loads to the battery (3).

7. An electric current distribution system according to one of the preceding claims, wherein the current detector (11) further comprises a current change detector (11c) for detecting a change of current.

8. An electric current distribution system according to claim 7, wherein the current change detector (11c) compares the input current (I1) with a predetermined or predeterminable threshold and outputs an abnormal detection signal (H) when the input current (I1) is not lower than the threshold.

9. An electric current distribution system according to claims 7 and 8, wherein the current change detector (11c) compares an actual input current (I1) with a previous input current and outputs an abnormal detection signal (H) when the actual input current (I1) is substantially higher than the previous input current.

## Patentansprüche

1. Elektrischer Anschlußkasten für eine Verwendung in einem elektrischen Stromverteilungssystem für Kraftfahrzeuge, umfassend:
einen Stromdetektor (11), welcher für eine externe Last (7) vorgesehen ist und
adaptiert ist, einen Eingangs- bzw. Eingabestrom (I1) an den Anschlußkasten (5) mit einem Ausgangs- bzw. Ausgabestrom (I2) von der Last (7) zu vergleichen und ein normales Detektionssignal (L) auszugeben, wenn der Eingangsstrom (I1) und der Ausgangsstrom (I2) im wesentlichen gleich zueinander sind, während er ein abnormales Detektionssignal (H) ausgibt, wenn der Eingangsstrom (I1) und der Ausgangsstrom (I2) voneinander abweichen, und
ein Stromregel- bzw. -steuergerät (12), welche für die Last vorgesehen und adaptiert ist, bei Erhalt des normalen Detektionssignals (L) zu bewirken, daß der Eingangsstrom (I1) entlang eines Stromwegs (12b, 12e) fließt, welcher zu der Last (7) führt, während bei Erhalt des abnormalen Detektionssignals (H) bewirkt wird, daß der Eingangsstrom (I1) in eine Stromunterbrechungsvorrichtung (12a, 12c, 12d) fließt,
**dadurch gekennzeichnet, daß**
die Stromunterbrechungsvorrichtung (12a, 12c, 12d) eine thermische Vorrichtung (12c) beinhaltet, deren Widerstandswert mit der Temperatur variiert, wodurch der Stromfluß in die Last (7) unterbrochen wird.

2. Elektrischer Anschlußkasten nach Anspruch 1, worin die Stromunterbrechungsvorrichtung (12a, 12c, 12d) parallel zu dem Stromweg (12b, 12e) angeordnet ist.

3. Elektrischer Anschlußkasten nach Anspruch 1 oder 2, worin der Stromdetektor (11) einen Differentialverstärker (11a) umfaßt.

4. Elektrisches Anschlußkastensystem nach einem der vorangehenden Ansprüche, worin die thermische Vorrichtung (12c) einen Posistor und/oder einen Thermistor umfaßt.

5. Elektrisches Stromverteilungssystem für Kraftfahrzeuge, umfassend wenigstens einen elektrischen Anschlußkasten nach einem der vorangehenden Ansprüche, in welchem erste und zweite, schmelzbare Verbindungen (2, 4) mit einem Wechselstromgenerator (1) bzw. einer Batterie (8) verbunden sind, und ein Eingangsanschluß bzw. -kontakt des Anschlußkastens (5) mit den ersten und den zweiten, schmelzbaren Verbindungen (2, 4) verbunden ist und eine Vielzahl von Ausgangsanschlüssen bzw. -kontakten desselben mit wenigstens einer Last (7) verbunden ist.

6. Elektrisches Stromverteilungssystem nach Anspruch 5, weiters umfassend Verkabelungen bzw. Kabelbäume (WH) zum Ausbilden von Stromfeedback- bzw. -rückflußwegen von der Last (7) oder entsprechenden Lasten zu der Batterie (3).

7. Elektrisches Stromverteilungssystem nach einem der vorhergehenden Ansprüche, worin der Stromdetektor (11) weiters einen Stromänderungsdetektor (11c) zur Detektion einer Änderung des Stroms umfaßt.

8. Elektrisches Stromverteilungssystem nach Anspruch 7, worin der Stromänderungsdetektor (11c) den Eingangsstrom (I1) mit einer vorbestimmten oder vorbestimmbaren Schwelle bzw. Schwellwert vergleicht und ein abnormales Detektionssignal (H) ausgibt, wenn der Eingangsstrom (I1) nicht geringer ist als die Schwelle.

9. Elektrisches Stromverteilungssystem nach Anspruch 7 und 8, worin der Stromänderungsdetektor (11c) einen aktuellen bzw. tatsächlichen Eingangsstrom (I1) mit einem vorangehenden Eingangsstrom vergleicht und ein abnormales Detektionssignal (H) ausgibt, wenn der tatsächliche bzw. aktuelle Eingangsstrom (I1) wesentlich höher ist als der vorangehende Eingangsstrom.

## Revendications

1. Boîte de jonction électrique destinée à être utilisée dans un système de distribution de courant électrique pour véhicules automobiles comprenant :
un détecteur de courant (11) alimenté par une charge externe (7) et adapté pour comparer un courant d'entrée (l1) arrivant à la boîte de jonction (5) à un courant de sortie (l2) en provenance de la charge (7), et pour émettre un signal de détection normal (L) lorsque le courant d'entrée (l1) et le courant de sortie (l2) sont pratiquement égaux l'un par rapport à l'autre, ou un signal de détection anormal (H) lorsque le courant d'entrée (l1) et le courant de sortie (l2) varient l'un par rapport à l'autre, et
un contrôleur de courant (12) alimenté par la charge et adapté pour que, à réception du signal de détection normal (L), le courant d'entrée (l1) passe en suivant un trajet électrique (12b, 12e) conduisant à la charge (7) et que, à réception d'un signal de détection anormal (H), le courant d'entrée (l1) passe dans un dispositif de coupure de courant (12a, 12c, 12d) **caractérisé en ce que** le dispositif de coupure de courant (12a, 12c, 12d) comprend un dispositif thermique (12c) dont la valeur ohmique varie avec la température, coupant en conséquence le passage du courant dans la charge (7).

2. Boîte de jonction électrique selon la revendication 1, dans laquelle le dispositif de coupure de courant (12a, 12c, 12d) est disposé en parallèle par rapport au trajet du courant (12b, 12e).

3. Boîte de jonction électrique selon la revendication 1 ou 2, dans laquelle le détecteur de courant (11) comprend un amplificateur différentiel (11a).

4. Boîte de jonction électrique selon l'une quelconque des revendications précédentes, dans laquelle le dispositif thermique (12c) comprend un posisteur et/ou un thermistor.

5. Système de distribution de courant électrique pour véhicules automobiles, comprenant au moins une boîte de jonction électrique selon l'une quelconques des revendications précédentes, dans laquelle le premier et le second fils fusibles sont reliés respectivement à un alternateur (1) et à une batterie (8) et, une borne d'entrée de la boîte de jonction (5) est reliée au premier et au second fils fusibles (2, 4) et, une pluralité de bornes de sortie de ce qui précède est reliée à au moins une charge (7).

6. Système de distribution de courant électrique selon la revendication 5, comprenant en outre des faisceaux de câblage (WH) destinés à former des trajets de réaction d'intensité entre la charge (7) ou les charges respectives et la batterie (3).

7. Système de distribution de courant électrique selon l'une quelconque des revendications précédentes, dans lequel le détecteur de courant (11) comprend en outre un détecteur de variation de courant (11c) destiné à détecter une variation de courant.

8. Système de distribution de courant électrique selon la revendication 7, dans lequel le détecteur de variation de courant (11c) compare le courant d'entrée (l1) à un seuil prédéterminé ou susceptible d'être prédéterminé, et émet un signal de détection anormal (H) lorsque le courant d'entrée (l1) n'est pas inférieur au seuil.

9. Système de distribution de courant électrique selon l'une quelconque des revendications 7 et 8, dans lequel le détecteur de variation de courant (11c) compare un courant d'entrée actuel (l1) à un courant d'entrée antérieur et émet un signal de détection anormal (H) lorsque le courant d'entrée actuel (l1) est très nettement supérieur au courant d'entrée antérieur.
